(19) Europäisches Patentamt
European Patent Office
Office européen des brevets

(11) **EP 3 381 642 B1**

(12) **EUROPEAN PATENT SPECIFICATION**

(45) Date of publication and mention
of the grant of the patent:
**11.12.2019 Bulletin 2019/50**

(51) Int Cl.:
***B29C 45/40*** *(2006.01)*      ***B29C 45/76*** *(2006.01)*
***B29C 45/80*** *(2006.01)*

(21) Application number: **18164759.5**

(22) Date of filing: **28.03.2018**

(54) **INJECTION MOLDING MACHINE**

SPRITZGIESSMASCHINE

MACHINE DE MOULAGE À INJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2017 JP 2017072634**

(43) Date of publication of application:
**03.10.2018 Bulletin 2018/40**

(73) Proprietor: **Sumitomo Heavy Industries, Ltd.
Tokyo 141-6025 (JP)**

(72) Inventor: **OGISO, Taro
Chiba-shi, Chiba 263-0001 (JP)**

(74) Representative: **Louis Pöhlau Lohrentz
Patentanwälte
Postfach 30 55
90014 Nürnberg (DE)**

(56) References cited:
**EP-A1- 2 749 392     WO-A1-2014/082168**

EP 3 381 642 B1

**Description**

BACKGROUND OF THE INVENTION

Field of the Invention

Certain embodiments of the present invention relate to an injection molding machine.

Description of Related Art

In related art, a speed of an ejector unit is synchronized with a mold opening speed, an ejector tip speed with respect to a frame is set to 0, and thus, a plurality of molding products molded at the same cycle are dropped directly beneath (for example, Japanese Unexamined Patent Application Publication No. 2001-150496).

WO 2014/082168 A1 is directed to a device for optimizing a molding process. EP 2 749 342 A1 is directed to an injection molding machine with an ejector unit.

Ideally, if an ejector speed is set to be the same speed as the mold opening speed in the opposite direction, a relative speed becomes 0, and thus, the molding product removed from a mold is dropped directly beneath. In fact, however, when an ejector ejects the molding product from the mold, the molding product receives a resistance or the like from the mold, and thus, the molding product has a speed in a mold opening/closing directions due to influences of the resistance or the like. Accordingly, there may be variations in a drop position of the molding product for each molding product group in each cycle. As a countermeasure for eliminating the variations, in the related art, it has been common for a worker of a molding machine to visually monitor the drop position of the molding product and manually adjust the mold opening speed or the like. However, it is difficult to perform the setting to drop the molding product at a desired position.

SUMMARY OF THE INVENTION

The present invention is made in consideration of the above-described circumstances, and an object thereof is to provide an injection molding machine capable of easily performing setting for dropping a molding product at a desired position.

In order to achieve the above-described object, according to an aspect of the present invention, there is provided an injection molding machine according to claim 1, including: a mold clamping unit which includes a movable platen and a stationary platen; a molding product group information acquisition unit which acquires information relating to a molding product group dropping from a movable mold attached to the movable platen; a drop information calculation unit which calculates drop information relating to a distance between a stationary mold attached to the stationary platen and the molding product group, based on the information acquired by the molding product group information acquisition unit; and an adjusting unit which adjusts a drop position of the molding product group with respect to the stationary mold according to the drop information calculated by the drop information calculation unit.

Similarly, in order to achieve the above-described object, according to another aspect of the present invention, there is provided an injection molding machine according to claim 7, including: a mold clamping unit which includes a movable platen and a stationary platen; an operation input unit which receives an operation input from a worker of the injection molding machine; and an adjusting unit which adjusts a drop position of a molding product group dropping from a movable mold attached to the movable platen with respect to a stationary mold attached to the stationary platen, according to the operation input via the operation input unit, in which the operation input by the operation input unit is information relating to an increase or a decrease of a synchronization ratio which is a ratio between a mold opening speed of the movable platen and an ejection speed of an ejector unit which ejects the molding product group from the movable mold, and the adjusting unit changes the synchronization ratio according to the operation input to adjust the drop position of the molding product group with respect to the stationary mold.

According to the aspects of the present invention, it is possible to provide the injection molding machine capable of easily performing setting for dropping a molding product at a desired position.

BRIEF DESCRIPTION OF THE DRAWINGS

Fig. 1 is a view showing a state when a mold opening of an injection molding machine according to an embodiment is completed.

Fig. 2 is a view showing a state when a mold of the injection molding machine according to the embodiment is clamped.

Fig. 3 is a diagram showing a schematic configuration of a drop position adjusting system included in an injection molding machine according to a first embodiment.

Fig. 4 is a graph showing a synchronization relationship between an ejector speed and a mold opening speed.

Fig. 5 is a graph showing a relationship between an ejector position and the ejector speed.

Fig. 6 is a graph showing an example of an adjustment according to a synchronization ratio between a mold opening speed of a movable platen and an ejection speed of an ejector unit.

Fig. 7 is a flowchart showing an adjustment method of a drop position of a molding product group M using a synchronization ratio $\sigma$ performed in the first embodiment.

Fig. 8 is a flowchart showing an adjustment method of a mold opening limit of the movable platen performed in the first embodiment.

Fig. 9 is a diagram showing a schematic configuration of a drop position adjusting system included in an injection molding machine according to a second embodiment.

## DETAILED DESCRIPTION OF THE INVENTION

Hereinafter, embodiments will be described with reference to the accompanying drawings. In order to facilitate understanding of descriptions, the same reference numerals are assigned to the same constituent elements in each drawing as much as possible, and overlapping descriptions thereof are omitted.

First Embodiment

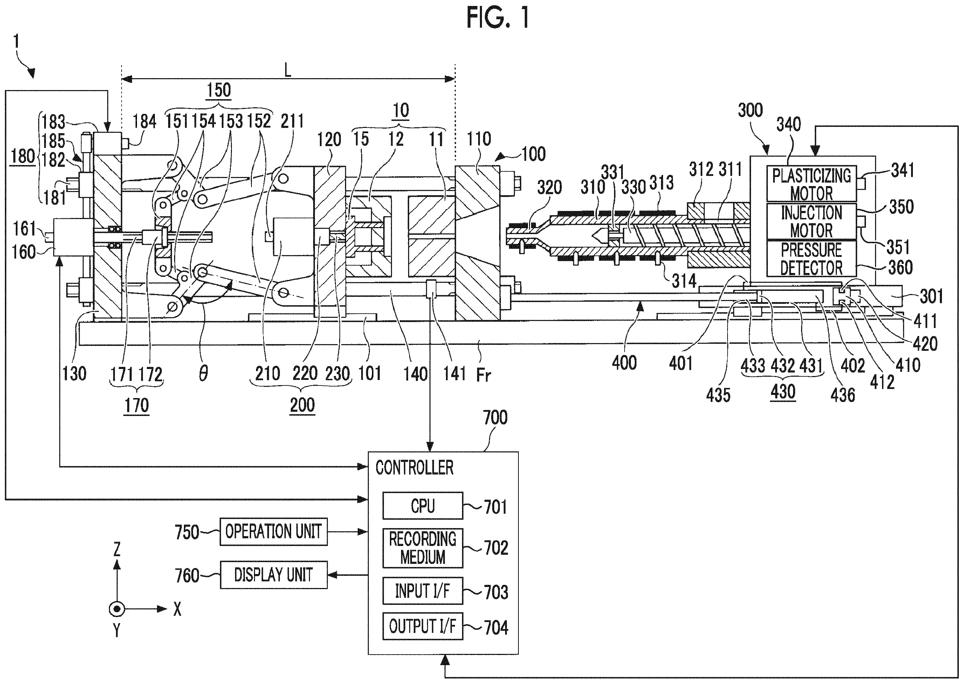

First, a first embodiment will be described with reference to Figs. 1 to 8. In addition, in Figs. 1 to 3, an X direction, a Y direction, and a Z direction are directions orthogonal to each other. The X direction and the Y direction are a horizontal direction, and the Z direction is a vertical direction. The X direction is the same as a movement direction of a movable platen 120 or an injection unit 300 of an injection molding machine 1 according to the present embodiment or a mold opening/closing direction of the injection molding machine 1, and the Y direction is a width direction of the injection molding machine 1.

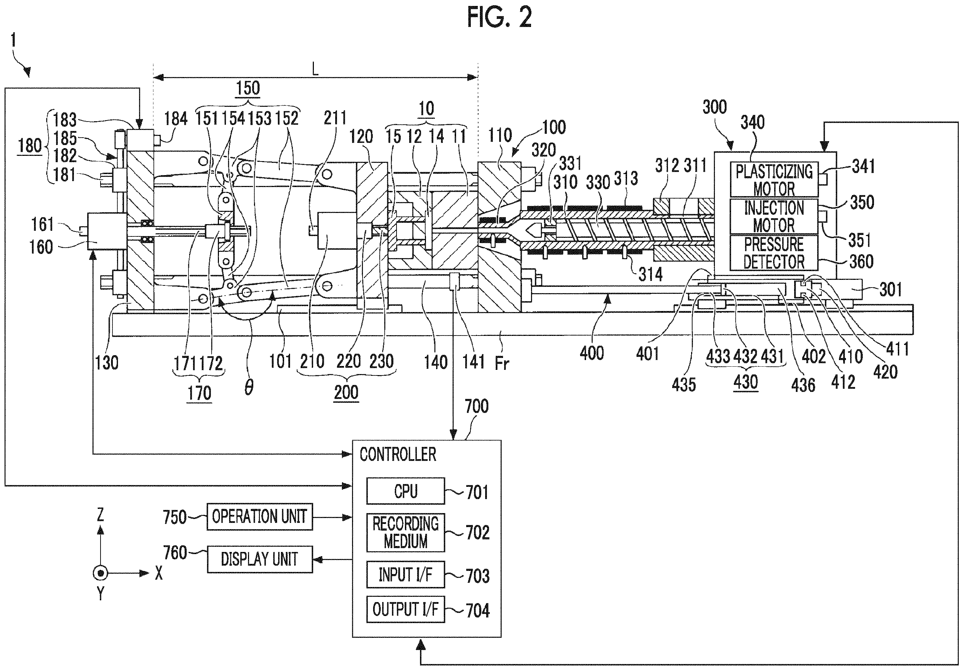

First, a schematic configuration of the entire injection molding machine 1 according to the present embodiment will be described with reference to Figs. 1 and 2.

Injection Molding machine

Fig. 1 is a view showing a state when a mold opening of the injection molding machine 1 according to an embodiment is completed. Fig. 2 is a view showing a state when a mold of the injection molding machine 1 according to the embodiment is clamped. As shown in Figs. 1 and 2, the injection molding machine includes a mold clamping unit 100, an ejector unit 200, an injection unit 300, a movement unit 400, and a controller 700. Hereinafter, each component of the injection molding machine will be described.

Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and a mold opening/closing direction is a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening/closing direction with respect to the frame Fr. A guide 101 which guides the movable platen 120 is placed on the frame Fr. A movable mold 12 is attached to a surface of the movable platen 120 facing the stationary platen 110.

The movable platen 120 is moved forward or rearward with respect to the stationary platen 110, and thus, closing, clamping, and opening of the mold are performed. The mold unit 10 is configured of the stationary mold 11 and the movable mold 12.

The toggle support 130 is connected to the stationary platen 110 with a gap therebetween, and is placed on the frame Fr to be movable in mold opening/closing direction. In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening/closing direction with respect to the frame Fr. However, the toggle support 130 may be fixed to the frame Fr, and the stationary platen 110 may be movable in the mold opening/closing direction with respect to the frame Fr.

The stationary platen 110 and the toggle support 130 are connected to each other with a gap L in the mold opening/closing direction by the tie bar 140. A plurality of (for example, four) tie bars 140 may be used. The tie bars 140 are parallel in the mold opening/closing direction and extend according to a mold clamping force. A tie bar strain detector 141 which detects strain of the tie bar 140 may be provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening/closing direction with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or the like and the second link 153 is attached to the toggle support 130 so as to be oscillated by pins or the like. The second link 153 is attached to the crosshead 151 via a third link 154. If the crosshead 151 is moved forward or rearward with respect to the toggle support 130, the first link 152 and the second link 153 are bent and stretched and the movable platen 120 is moved forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 is moved forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 is moved forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products maybe simultaneously obtained.

In the mold opening process, the mold clamping motor 160 is driven to move the crosshead 151 rearward to a mold opening completion position at a set speed. Accordingly, the movable platen 120 is moved rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions. In addition, instead of the speed, the positions, or the like of the crosshead 151, a speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle $\theta$ (hereinafter, also referred to a "link angle $\theta$") between the first link 152 and the second link 153. The link angle $\theta$ is obtained from the position of the crosshead 151. When the link angle $\theta$ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle $\theta$ of the toggle mechanism 150 becomes a predetermined angle at the time of a mold touch where the movable mold 12 comes into contact with the stationary mold 11.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 are used to monitor or control the position of the toggle support 130 or the gap L.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motors 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening/closing direction are horizontal directions. However, the mold clamping unit 100 may be a vertical type mold clamping unit in which the mold opening/closing direction are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other in mold opening/closing direction by the tie bar with a gap therebetween. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is open is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can be moved forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 is moved forward and the molding product is ejected. Thereafter, the ejector motor 210 is driven to move the ejector rod 230 rearward at a set speed, and thus, the movable member 15 is moved rearward to an original standby position. For example, a position or speed of the ejector rod 230 is detected using an ejector motor encoder 211. The ejector motor encoder 211 detects the rotation of the ejector motor 210 and sends signals indicating the detection results to the controller 700.

Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 is moved rearward. Thereafter, if the screw 330 is moved forward, the liquid molding material accumulated in front of the screw 330 is injected from the nozzle 320 and the inside of the mold unit 10 is filled with the liquid molding material.

A back flow prevention ring 331 is attached to a front portion of the screw 330 to be movable forward or rearward as a back flow prevention valve which prevents a back flow of the molding material from the front side of the screw 330 toward the rear side when the screw 330 is pushed forward.

When the screw 330 is moved forward, the back flow prevention ring 331 is pushed toward the rear side by the pressure of the molding material in front of the screw 330 and is moved rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and is moved forward relative to the screw 330 to an open position (refer to Fig. 1) at which the flow path of the molding material is open. Accordingly, the molding material is fed to the front side of the screw 330.

The back flow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward relative to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder or the like, for example.

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may be moved forward or may be moved rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 is moved rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 is moved rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies a melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction.

However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 is moved forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 is moved rearward and thus, the nozzle 320 is separated from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "shot" or a "molding cycle". In addition, a time required for once shot is also referred to as a "molding cycle time".

The controller 700 is connected to an operation unit 750 or the display unit 760. The operation unit 750 receives an input operation from a user and outputs signals corresponding to the input operation to the controller 700. The display unit 760 displays an operation screen corresponding to the input operation by the operation unit 750 under the control of the controller 700.

The operation screen is used for the setting of the injection molding machine 1 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 1 or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

Drop Position Adjusting System

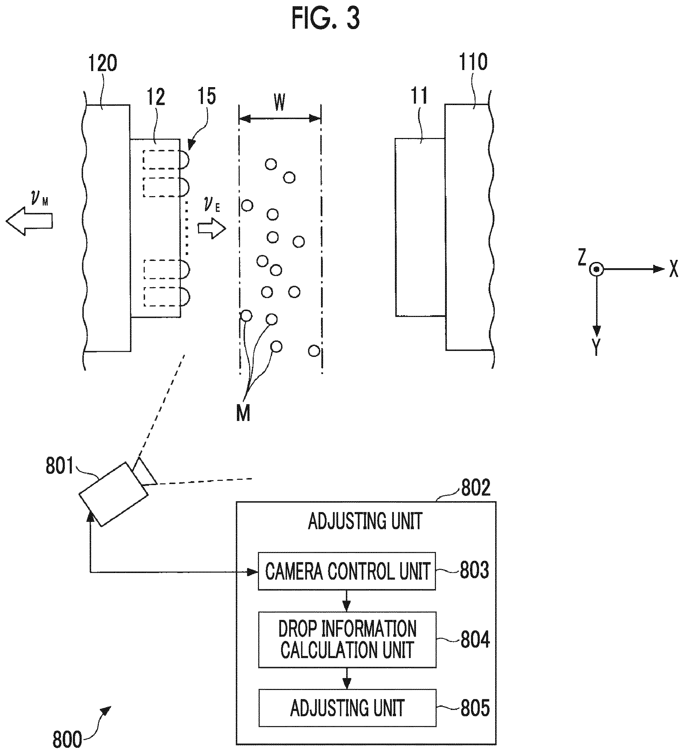

Next, a drop position adjusting system 800 which is a main part of the first embodiment will be described with reference to Figs. 3 to 8, and the drop position adjusting system 800 observes a drop state of the molding product to automatically adjust a condition. Fig. 3 is a diagram showing a schematic configuration of the drop position adjusting system 800 included in an injection molding machine 1 according to the first embodiment.

As shown in Fig. 3, the drop position adjusting system 800 includes a camera 801 (molding product group information acquisition unit) and an adjusting device 802.

The camera 801 photographs the molding product group M dropping from the mold of the mold clamping unit 100 and outputs the photographed image data to the adjusting device 802.

The adjusting device 802 calculates drop information relating to a distance between the stationary mold 11 attached to the stationary platen 110 and the molding product group M, based on the image data of the molding product group M photographed by the camera 801, and adjusts the drop position of the molding product group M with respect to the stationary mold according to the calculated drop information.

In the present embodiment, specifically, the "drop information" includes a horizontal speed vx in the mold opening/closing direction of the mold product group M dropping from the movable mold 12 attached to the movable platen 120 and a width W of the drop position along the mold opening/closing direction of the molding product group M. In addition, the horizontal speed vx is a speed with respect to the frame Fr (stationary mold 11). In addition, in the present embodiment, the adjusting device 802 changes the synchronization ratio $\sigma$ between the movable platen 120 and the ejector unit 200 in order to adjust the drop position of the molding product group M. The synchronization ratio $\sigma$ is defined as a ratio between a mold opening speed $v_M$ of the movable platen 120 and an ejection speed $v_E$ (hereinafter, also referred to as an ejection speed $v_E$) of the ejector unit 200 which ejects the molding product group M from the movable mold 12.

In addition, as shown in Fig. 3, in the present embodiment, the ejection speed $v_E$ of the ejector unit 200 is a speed of the movable member 15 which is moved forward or rearward to the ejection position inside the movable mold 12 via the ejector rod 230 by power of the ejector motor 210 of the ejector unit 200. In addition, the mold opening speed vM of the mold clamping unit 100 is a movement speed of the movable mold 12 in the mold opening process .

The adjusting device 802 includes a camera control unit 803, a drop information calculation unit 804, and an adjusting unit 805 with respect to the above-described functions.

The camera control unit 803 controls an operation of the camera 801. For example, the camera control unit 803 controls the camera 801 so as to photographs all moving images of the molding product group M dropping from the movable mold 12 attached to the movable platen 120 during the mold opening process. The camera control unit 803 receives the image data of the molding product group M photographed by the camera 801 from the camera 801 and outputs the image data to the drop information calculation unit 804.

Based on the image data of the molding product group M photographed by the camera 801, the drop information calculation unit 804 calculates the horizontal speed $v_X$ of the molding product group M and a drop position width W of the molding product group M, as the drop information relating to the distance between the stationary mold 11 attached to the stationary platen 110 and the molding product group M.

The adjusting unit 805 adjusts the drop position of molding product group M with respect to the stationary mold 11, based on the drop information (the horizontal speed $v_X$, the drop position width W) calculated by drop information calculation unit 804. Specifically, the synchronization ratio $\sigma$ between the movable platen 120 and the ejector unit 200 is changed such that the horizontal speed $v_X$ is 0, and thus, the drop position of the molding product group M is adjusted.

In addition, after the adjusting unit 805 adjusts the drop position of the molding product group M using the synchronization ratio $\sigma$, the adjusting unit 805 adjusts a mold opening limit of the mold clamping unit 100 according to a relationship between the drop position width W calculated by the drop information calculation unit 804 and a mold opening amount of the movable platen 120.

The adjusting device 802 is physically a computer device including a CPU, a memory, an input interface, an output interface, or the like. The adjusting device 802 may be mounted as a portion of the above-described control device 700 or may be mounted as an arithmetic device separated from the control device 700.

In addition, in Fig. 3, components of the adjusting device 802 are shown by functional blocks. However, the functional blocks are conceptual and do not necessarily have to be physically configured as shown. All functional blocks or some functional blocks can be configured so as to be dispersed or integrated functionally or physically in any unit. All processing functions or some processing functions performed in the functional blocks can be realized by a program executed by a CPU or can be realized as hardware by wired logic.

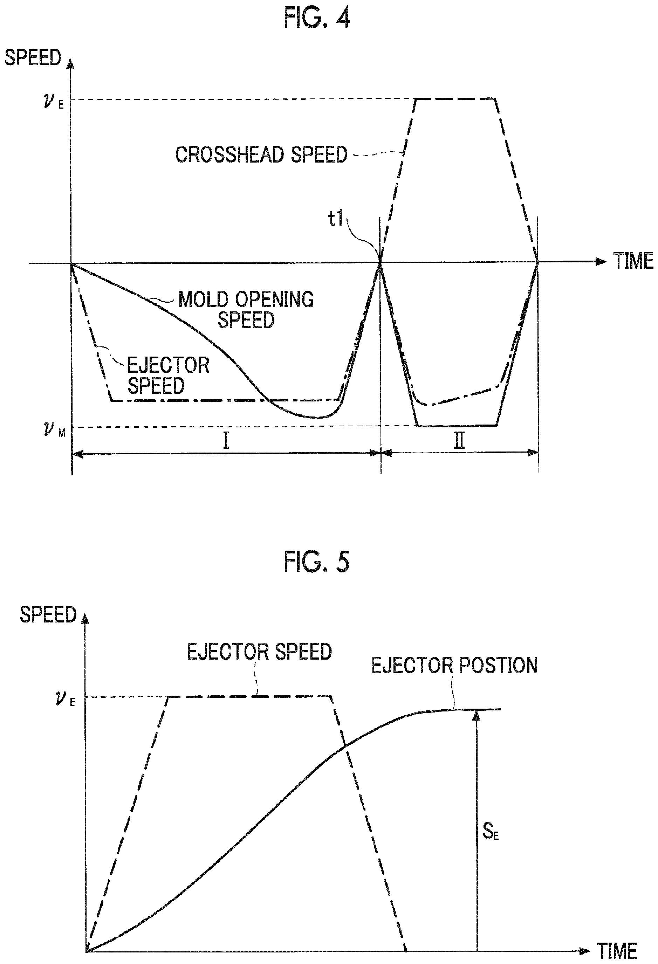

An adjustment method of the drop position of the molding product group M using the synchronization ratio $\sigma$ will be schematically described with reference to Figs. 4 to 6. Fig. 4 is a graph showing a synchronization relationship between the ejection speed $v_E$ and the mold opening speed $v_M$. In the present embodiment, in order to synchronize the ejection speed $v_E$ of the ejector unit 200 and the mold opening speed $v_M$ such that both speeds are set to the same speed in a direction opposite to each other and a relative speed thereof is 0, a speed pattern of the mold opening speed $v_M$ is set. In Fig. 4, the mold opening speed $v_M$ is indicated by a solid line, the ejection speed $v_E$ is indicated by a dotted line, and a crosshead speed is indicated by one-dotted chain line.

As shown Fig. 4, in this embodiment, the mold opening process is divided into two sections I and II, and in the section I, the movable mold 12 and the stationary mold 11 are transitioned from a contact state to a separated state. In the section II, the molding product group M is ejected by the ejector unit 200, and the ejection speed $v_E$ and the mold opening speed $v_M$ are synchronized with each other. The mold opening speed $v_M$ temporarily becomes 0 a time t1 between the section I and the section II, and a mold opening operation of the movable mold is temporarily stopped.

In the section I, a speed trajectory of the crosshead 151 is planned in a trapezoidal shape as shown in Fig. 4, and the mold opening is performed based on this. In the section I, the mold opening speed $v_M$ smoothly increases according to an increase of the crosshead speed and smoothly decreases according to deceleration of the crosshead.

In the section II, the ejection speed $v_E$ and the mold opening speed $v_M$ are synchronized with each other. More specifically, a speed trajectory of the ejector unit 200 is planned and the speed trajectory of the crosshead 151 is controlled such that the ejection speed $v_E$ of the ejector unit 200 and the mold opening speed $v_M$ are synchronized with each other. In the section II, the crosshead speed is positioned inside a trapezoid of the mold opening speed $v_M$.

Fig. 5 is a graph showing a relationship between an ejector position and the ejector speed. In Fig. 5, the ejector position is indicated by a solid line and the ejector speed is indicated by a dotted line. As shown in Fig. 5, a trajectory of the ejector unit 200 is determined by an ejection amount $S_E$ and the ejection speed $v_E$. The ejection amount $S_E$ is a fixed value which is determined by a structure of the mold. The ejection speed $v_E$ can be changed.

From Figs. 4 and 5, the synchronization ratio $\sigma$ between the mold opening speed $v_M$ of the mold clamping unit 100 and the ejection speed $v_E$ of the ejector unit 200 in the section II of the mold opening process can be represented by the following Expression (1).

$$\sigma = \frac{|v_M|}{|v_E|} \qquad \cdots (1)$$

As shown in Expression (1), the synchronization ratio $\sigma$ between the mold opening speed $v_M$ and the ejection speed $v_E$ can also be expressed as a ratio between an absolute value of the mold opening speed $v_M$ of the mold clamping unit 100 and an absolute value of the ejection speed $v_E$ of the ejector unit 200.

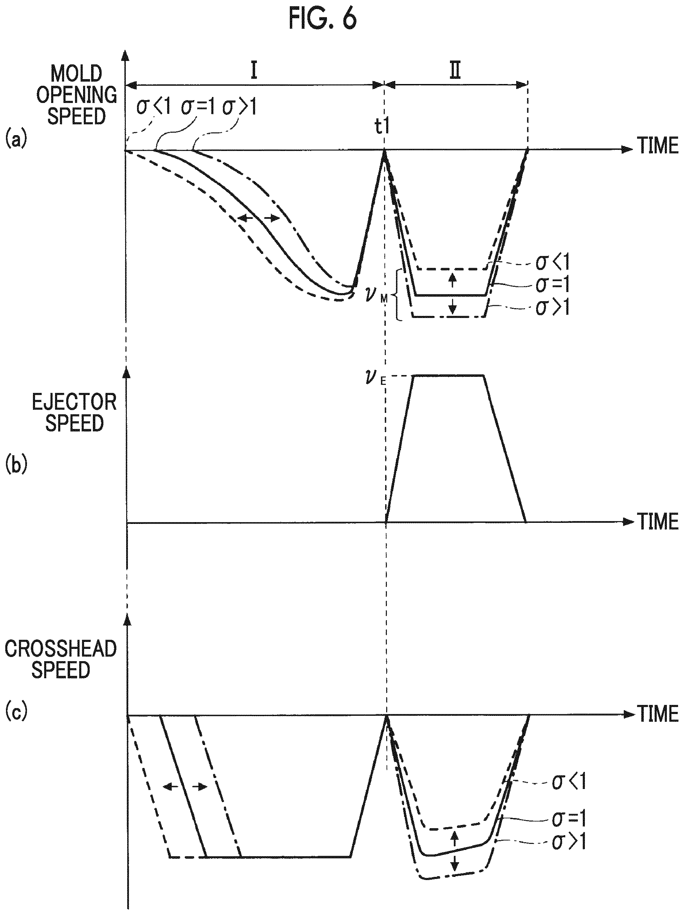

Fig. 6 is a graph showing an example of an adjustment according to the synchronization ratio $\sigma$ between the mold opening speed $v_M$ of the movable platen 120 and the ejection speed $v_E$ of the ejector unit 200. In Fig. 6, the transitions of the mold opening speed $v_M$ and the crosshead speed when the synchronization ratio $\sigma$ is 1 ($\sigma = 1$) are indicated by solid lines, the transitions thereof when the synchronization ratio $\sigma$ is smaller than 1 ($\sigma < 1$), and the transitions thereof when the synchronization ratio $\sigma$ is larger than 1 ($\sigma > 1$) are indicated by one-dot chain lines. In addition, the ejection speed $v_E$ is indicated by a single solid line graph regardless of the synchronization ratio $\sigma$. Fig. 6 (a) is a graph showing the mold opening speed, Fig. 6(b) is a graph showing the ejector speed, and Fig. 6(c) is a graph showing the crosshead speed.

As shown in Fig. 6, in the section II, when the synchronization ratio $\sigma$ is 1, the mold opening speed $v_M$ and the ejection speed $v_E$ are the same speed as each other in the direction opposite to each other. This relationship is similar to that of Fig. 4. In addition, the synchronization ratio $\sigma$ is smaller than 1 ($\sigma < 1$), the mold opening speed $v_M$ is smaller than the ejection speed $v_E$. In addition, the synchronization ratio $\sigma$ is larger than 1 ($\sigma > 1$), the mold opening speed $v_M$ is larger than the ejection speed $v_E$. Moreover, in the section II, a crosshead speed trajectory is similarly changed according to the change of $\sigma$, that is, an increase or a decrease of the molding opening speed $v_M$.

In the section II, when constraints which make the mold opening limit the same regardless of the synchronization ratio $\sigma$ are imposed, a temporary stopping position of the mold opening is changed according to the synchronization ratio $\sigma$ between the mold opening speed $v_M$ and ejection speed $v_E$. That is, the mold opening amount at the timing of the time t1 in Fig. 6 varies depending on the synchronization ratio $\sigma$. For example, as the synchronization ratio $\sigma$ decreases, the mold opening amount in the section II decreases, and as the synchronization ratio $\sigma$ increases, the mold opening amount in the section II increases.

Accordingly, in order to make the mold opening limit at the time of the completion of the mold opening operation the same regardless of $\sigma$, it is necessary to increase the mold opening amount of the section I as the synchronization ratio $\sigma$ is smaller. That is, a temporary stopping timing (time t1) of the mold opening is slower than a start timing of the section I. The time t1 between this sections I and II can be expressed as an "ejection start timing of ejector unit 200".

Moreover, in actual, the time t1 varies depending on the synchronization ratio $\sigma$ as described above. However, in Fig. 6, for the sake of convenience of explanation, the positions of the time t1 are expressed uniformly. In other words, in actual, a start timing of the mold opening operation is the same timing regardless of the synchronization ratio $\sigma$. However, the time t1 is taken as a reference in Fig. 6, the start timing of a left end of the graph is deviated by $\sigma$. Therefore, in Fig. 6, in a case where the synchronization ratio $\sigma$ is small ($\sigma < 1$), the trajectory of the mold opening speed $v_M$ in the section I extends in a time axis direction.

Similarly, it is necessary to decrease the mold opening amount of the section I as the synchronization ratio $\sigma$ is larger. That is, the temporary stopping timing (time t1) of the mold opening is faster than the start timing of the section I. As described above, in Fig. 6, for the sake of convenience of explanation, the positions of the time t1 are expressed uniformly regardless of the synchronization ratio $\sigma$. Accordingly, in a case where the synchronization ratio $\sigma$ is large ($\sigma > 1$), the trajectory of the mold opening speed $v_M$ in the section I shrinks in the time axis direction. In addition, in the section I, the crosshead speed trajectory is changed similarly to the mold opening speed $v_M$ according to the change of the synchronization ratio σ.

In addition, unlike the constraint condition shown in Fig. 6, in a case where a constraint for fixing the temporary stopping position of the mold opening process to the same position regardless of the synchronization ratio σ is imposed, the mold opening speed trajectory according to σ of the section I shown in Fig. 6 is not changed and only the change of the section II can be applied. That is, the position of the mold opening limit is changed by the change of the synchronization ratio σ between the mold opening speed $v_M$ and the ejection speed $v_E$.

In the case of the above-described two cases, a precondition that the ejecting completion and the mold opening limit reaching are performed at the same time is common.

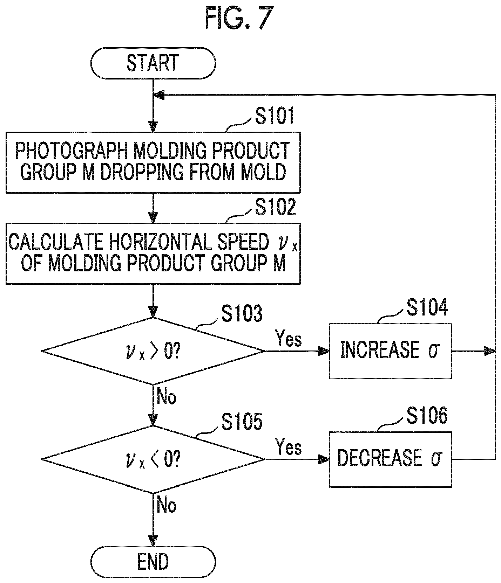

With reference to Fig. 7, an example of a procedure of the adjustment method of the drop position of the molding product group M using the synchronization ratio σ in the first embodiment will be described. Fig. 7 is a flowchart showing the adjustment method of the drop position of the molding product group M using a synchronization ratio σ performed in the first embodiment. For example, the flowchart shown in Fig. 7 is performed at predetermined intervals by the adjusting device 802. Hereinafter, the flowchart of Fig. 7 will be described.

In Step S101, the camera 801 is controlled by the camera control unit 803, and thus, the molding product group M dropping from the movable mold 12 of the mold clamping unit 100 is photographed. The camera control unit 803 outputs the photographing data input from the camera 801 to the drop information calculation unit 804. If the processing of Step S101 is completed, the step proceeds to Step S102.

In Step S102, the drop information calculation unit 804 calculates the horizontal speed $v_X$ of the molding product group M using the photographing data of the molding product group M photographed in Step S101. For example, the drop information calculation unit 804 calculates the horizontal speed of each molding product using an image processing technique such as an optical flow, averages the speeds, and can calculate the speed as the horizontal speed $v_X$ of molding product group M. The drop information calculation unit 804 outputs the information of the calculated horizontal speed $v_X$ to the adjusting unit 805. If the processing of Step S102 is completed, the step proceeds to Step S103.

In Step S103, the adjusting unit 805 determines whether or not the horizontal speed $v_X$ of the molding product group M calculated in Step S102 is a positive value ($v_X > 0$). Here, a positive/negative direction of the horizontal speed $v_X$ is the same as a positive/negative direction of the x axis. That is, when the horizontal speed $v_X$ is a positive value, the molding product group M is dropped to be deviated toward the stationary mold 11 side (a right side in Fig. 3) rather than being dropped straight downward, and when the horizontal speed $v_X$ is a negative value, the molding product group M tends to be biased toward the side of movable mold 12 (a left side in Fig. 3).

As a result of the determination in Step S103, if the horizontal speed $v_X$ is a positive value (Yes in Step S103), it can be determined that the molding product group M is not dropped straight downward but is dropped to be deviated toward the stationary mold 11 side (the right side in Fig. 3). Accordingly, in Step S104, the adjusting unit 805 increases the synchronization ratio σ between the mold opening speed $v_M$ and the ejection speed $v_E$. Therefore, the mold opening speed $v_M$ is adjusted to be larger than the ejection speed $v_E$, the relative speed between the mold opening speed $v_M$ and the ejection speed $v_E$ is generated in the negative direction (the left direction in Fig. 3), and thus, the horizontal speed $v_X$ approaches 0 side. As a result, a drop trajectory of the molding product group M is changed such that it becomes directly beneath. In addition, the synchronization ratio σ in this step increases, and thus, the mold opening amount also increases when the ejection speed $v_E$ and the mold opening speed $v_M$ are synchronized with each other (section II in Fig. 6). Therefore, in the case where the constraint that the mold opening limit is the same regardless of the synchronization ratio σ is imposed as described above, in this step, the mold opening amount of the section I in Fig. 6 further decreased. Specifically, for example, the temporary stopping timing (the time t1 in Fig. 6) of the mold opening is made faster than the start timing of section I. If the processing of Step S104 is completed, the step returns to Step S101 and this control flow is repeated.

Meanwhile, as a result of the determination in Step S103, if the horizontal speed $v_X$ is not a positive value (No in Step S103), the step proceeds to Step S105. In Step S105, the adjusting unit 805 determines whether or not the horizontal speed $v_X$ of the molding product group M calculated in Step S102 is a negative value (vx < 0).

As a result of the determination in Step S105, if the horizontal speed $v_X$ is a negative value (Yes in Step S105), it can be determined that the molding product group M is dropped to be deviated toward the movable mold 12 side (the left side in Fig. 3). Accordingly, in Step S106, the adjusting unit 805 decreases the synchronization ratio σ between the mold opening speed $v_M$ and the ejection speed $v_E$. Therefore, the mold opening speed $v_M$ is adjusted to be smaller than the ejection speed $v_E$, the relative speed between the mold opening speed $v_M$ and the ejection speed $v_E$ is generated in the positive direction (the right direction in Fig. 3), and thus, the horizontal speed $v_X$ approaches 0 side. As a result, the drop trajectory of the molding product group M is changed such that it becomes directly beneath. In addition, the synchronization ratio σ in this step decreases, and thus, the mold opening amount also decreases when the ejection speed $v_E$ and the mold opening speed $v_M$ are synchronized with each other (section II in Fig. 6). Therefore, in the case where the constraint that the mold opening limit is the same regardless of the synchronization ratio σ is imposed as described above, in this step, the mold opening amount of the section I in Fig. 6 further increases. Specifically, for example, the temporary stopping timing (the time t1 in Fig. 6) of the mold opening is made slower than the start timing of section I. If the processing of Step S106 is completed, the step returns to Step S101 and this control flow is repeated.

Meanwhile, as a result of the determination in Step S105, if the horizontal speed $v_X$ is not a negative value (No in Step S105), it can be determined that the horizontal speed $v_X$ is 0 ($v_X = 0$) and the molding product group M is dropped to a desired position directly beneath, and thus, the present control flow ends.

Moreover, in the present embodiment, the horizontal speed $v_X$ is 0 ($v_X = 0$) as the condition for completing the drop position adjustment. However, the present invention is not limited to this. For example, entering a predetermined range including $v_X = 0$ may be the completion condition.

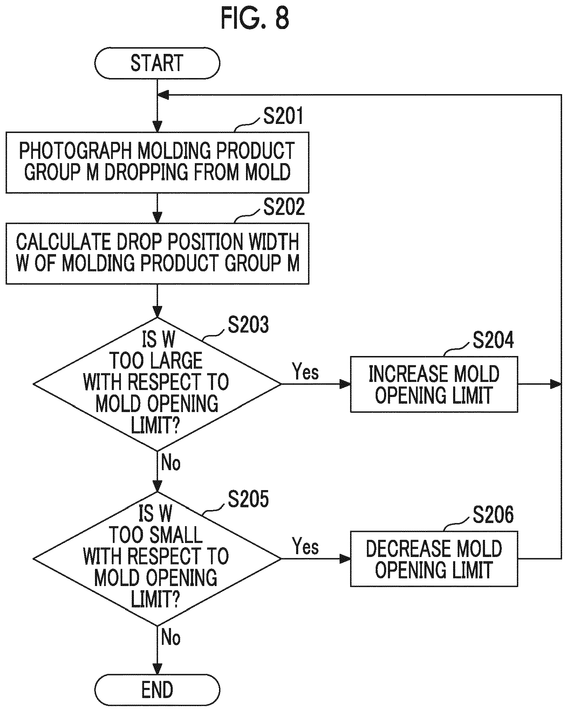

With reference to Fig. 8, an example of an adjustment method of the mold opening limit of the movable platen 120 according to the first embodiment will be described. Fig. 8 is a flowchart showing the adjustment method of the mold opening limit of the movable platen 120 performed in the first embodiment. In the present embodiment, the mold opening limit of the movable platen 120 is adjusted according to a relationship between the drop position width W of the molding product group M and the mold opening amount of the movable platen 120. For example, the flowchart shown in Fig. 8 is performed by the adjusting device 802 after the adjustment processing of the drop position of the molding product group M described with reference to Fig. 7 is completed and the molding product group M is adjusted to be dropped directly beneath. Hereinafter, the flowchart of Fig. 8 will be described.

In Step S201, the camera 801 is controlled by the camera control unit 803, and thus, the molding product group M dropping from the mold is photographed. The camera control unit 803 outputs the photographing data input from the camera 801 to the drop information calculation unit 804. If the processing of Step S201 is completed, the step proceeds to Step S202.

In Step S202, the drop information calculation unit 804 calculates the drop position width W of the molding product group M using the photographing data of the molding product group M photographed in Step S201. For example, the drop information calculation unit 804 outputs the information of the calculated drop position width W to the adjusting unit 805. If the processing of Step S202 is completed, the step proceeds to Step S203.

In Step S203, the adjusting unit 805 determines whether or not the drop position width W of the molding product group M calculated in Step S202 is too large with respect to the mold opening limit. For example, as a reference for comparing a magnitude relationship between the drop position width W and the mold opening limit, a distance between the position of the movable mold 12 when the mold opening operation is completed and an end position on the movable mold 12 side of the drop position width W can be used. When this distance is smaller than a predetermined threshold value, it is determined that the drop position width W is too large with respect to the mold opening limit.

As a result of the determination in Step S203, in a case where the drop position width W is too large with respect to the mold opening limit (Yes in Step S203), it can be determined that a drop range of the molding product group M is close to the mold, and thus, in Step S204, the mold opening limit is increased by the adjusting unit 805. Accordingly, a gap between the molding product group M and the mold is widened, and thus, the drop position width W of the molding product group M is changed in a direction which can be determined to be an appropriate size with respect to the mold opening limit. If the processing of Step S204 is completed, the step returns to Step S201, and the present control flow is repeated.

Meanwhile, as a result of the determination in Step S203, if the drop position width W is not too large with respect to the mold opening limit (No in Step S203), the step proceeds to Step S205. In Step S205, the adjusting unit 805 determines whether or not the drop position width W of the molding product group M calculated in Step S202 is too small with respect to the mold opening limit.

As a result of the determination in Step S205, in a case where the drop position width W is too small with respect to the mold opening limit (Yes in Step S205), it can be determined that a drop range of the molding product group M is too far from the mold and the mold opening limit is wastefully set large, and thus, in Step S206, the mold opening limit is decreased by the adjusting unit 805. Accordingly, the gap between the molding product group M and the mold is narrowed, and thus, the drop position width W of the molding product group M is changed in the direction which can be determined to be an appropriate size with respect to the mold opening limit. If the processing of Step S206 is completed, the step returns to Step S201, and the present control flow is repeated.

Meanwhile, as a result of the determination in Step S205, if the drop position width W is not too small with respect to the mold opening limit (No in Step S205), it can be determined that the drop position width W of the molding product group M is set to an appropriate size with respect to the mold opening limit, the present control flow ends.

Next, effects of the injection molding machine 1 according to the present embodiment will be described. The injection molding machine 1 of the present embodiment includes the mold clamping unit 100 having the movable platen 120 and the stationary platen 110. The injection molding machine 1 includes an injection molding machine 1 includes the camera 801 which photographs the molding product group M dropping from the movable mold 12 attached to the movable platen 120, the drop information calculation unit 804 which calculates the drop information (in the present embodiment, the speed (the horizontal speed $v_X$) in the mold opening/closing direction of the molding product group M) relating to the distance between the stationary mold 11 attached to the stationary platen 110 and the molding product group M, based on the image photographed by the camera 801, and the adjusting unit 805 which adjusts the drop position of the molding product group M with respect to the stationary mold 11 according to the drop information calculated by the drop information calculation unit 804.

As described above, in the related art, in order to improve variations of the drop position of the molding product, it has been common for a worker of a molding machine to visually monitor the drop position of the molding product and manually adjust the mold opening speed or the like. Meanwhile, in the present embodiment, according to the above-described configuration, it is possible to automatically adjust the drop position of the molding product group M using the camera image of the molding product group M dropping from the movable mold 12. For this reason, unlike the related art, it is possible to uniformly and automatically set the setting for dropping the molding product at a desired position, regardless of the skill of the worker or the like. Accordingly, in the injection molding machine 1 of the present embodiment, it possible to easily perform setting for dropping the molding product at a desired position. In addition, it is possible to appropriately set and correct the distance between the drop position of the molding product and the stationary mold 11, and thus, for example, it is possible to suppress the variations of the drop time of the molding product or a cycle-down caused by the molding product abutting the stationary mold 11 and being dropped.

In addition, in the injection molding machine 1 of the present embodiment, the adjusting unit 805 adjusts the drop position of the molding product group M with respect to the stationary mold 11 by changing the mold opening speed $v_M$ of the movable platen 120. More specifically, by changing the synchronization ratio $\sigma$ between the movable platen 120 and the ejector unit 200 which is the ratio between the mold opening speed $v_M$ and the ejection speed $v_E$ of the ejector unit 200 which ejects the molding product group M from the movable mold 12, the drop position of the molding product group M with respect to the stationary mold 11 is adjusted.

The mold opening speed $v_M$ and the ejection speed $v_E$ are speeds in directions opposite to each other in the mold opening/closing direction. Accordingly, by changing the synchronization ratio $\sigma$ between both speeds, the relative speed of the ejection speed $v_E$ with respect to the mold opening speed $v_M$ can be changed, and as a result, the horizontal speed $v_X$ of the molding product group M can also be changed. The relationship between the synchronization ratio $\sigma$ which is the control ratio and a drop behavior of the molding product group M which is an object to be controlled is strong, and thus, accuracy of adjusting the drop position of the molding product group M can be further improved.

Ideally, the horizontal speed is 0 and the molding product group M is dropped directly beneath. In the present embodiment, the horizontal speed $v_X$ (the speed in the mold opening/closing direction) of the molding product group M is used as the drop information for adjusting the drop position of the molding product group M. Accordingly, it is possible to accurately ascertain a difference between the drop position and an ideal drop trajectory of the molding product group M, and it is possible to improve adjustment accuracy of the drop position of the molding product group M.

In addition, in the injection molding machine 1 of the present embodiment, the adjusting unit 805 adjusts the drop position of the molding product group M to the stationary mold 11 by changing the synchronization ratio $\sigma$ such that the horizontal speed $v_X$ is 0. According to this configuration, it is possible to adjust the drop trajectory of the molding product group M to an ideal behavior in which the horizontal speed is 0 and the molding product M is dropped directly beneath, and thus, it is possible to further improve the adjustment accuracy of the drop position of the molding product group M.

Moreover, in the injection molding machine 1 of the present embodiment, the adjusting unit 805 changes the ejection start timing (time t1 in Fig. 6) of the ejector unit 200 which ejects the molding product group M from the movable mold 12 to adjust the drop position of the molding product group M with respect to the stationary mold 11.

As described with reference to Fig. 6, in the present embodiment, the mold opening process is divided into the two sections I and II, and in the section I, the movable mold 12 and the stationary mold 11 are transitioned from the contact state to the separated state, and in the section II, the molding product group M is ejected by the ejector unit 200, and the ejection speed $v_E$ and mold opening speed $v_M$ are synchronized with each other. If the synchronization ratio $\sigma$ is changed, the mold opening amount in the section II is changed. According to the above-described configuration, by changing the ejection start timing t1 of the ejector unit 200, the mold opening amount of the section I can be changed according to the variation of the mold opening amount of the section II, and thus, it is possible to make the mold opening limit the same regardless of the synchronization ratio $\sigma$.

In addition, in the injection molding machine 1 of the present embodiment, the drop information calculation unit 804 calculates the drop position width W in the mold opening/closing direction of the molding product group M dropping from the movable mold 12. After the adjusting unit 805 adjusts the drop position using the synchronization ratio $\sigma$, the adjusting unit 805 adjusts the mold opening limit of the movable platen 120 according to the relationship between the drop position width W calculated by the drop information calculation unit 804 and the mold opening amount of the movable platen 120.

According to this configuration, it is possible to adjust the drop position width W of the molding product group M to an appropriate size with respect to the mold opening limit. For example, in the case where the drop position width W is too small with respect to the mold opening limit, the mold opening limit is narrowed and adjusted appropriately, and thus, the mold opening amount does not increase unnecessarily, and the cycle-down can be suppressed. In addition, in the case where the drop position width W is too large with respect to the mold opening limit, the mold opening limit is widened and adjusted appropriately, and thus, it is possible to suppress the variations of the drop time of the molding product or a cycle-down caused by the molding product abutting the stationary mold 11 and being dropped.

In addition, in the first embodiment, the configuration in which the molding product group M dropping from the movable mold 12 is photographed by the camera 801 and the drop information (horizontal speed $v_x$, drop position width W) is calculated based on the image photographed by the camera is exemplified. However, elements other than the camera 801 may be used as long as it can acquire the information relating to the molding product group M. For example, a configuration of performing irradiation with microwaves to acquire the drop information from reflected waves may be adopted.

Second Embodiment

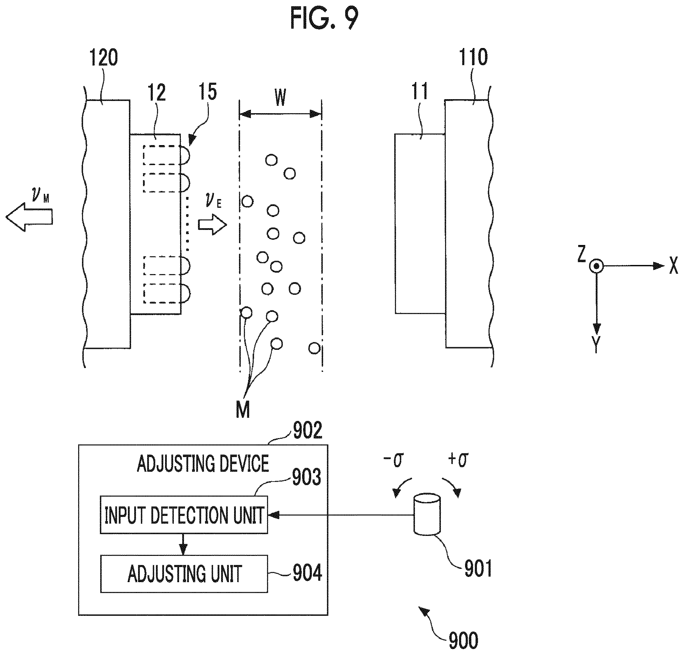

A second embodiment will be described with reference to Fig. 9. Fig. 9 is a diagram showing a schematic configuration of a drop position adjusting system 900 included in an injection molding machine according to the second embodiment. In the second embodiment, the drop position adjusting system 900 is different from the drop position adjusting system 800 of the first embodiment in that the drop position of the molding product group M is not adjusted by the image of the camera and is adjusted by an operation input from the worker of the injection molding machine 1.

As shown in Fig. 9, the drop position adjusting system 900 includes an operation input unit 901 and an adjusting device 902.

The operation input unit 901 is an element for the worker of injection molding machine 1 to perform the operation input. In the present embodiment, the operation input is information relating to an increase/decrease of the synchronization ratio $\sigma$ between the movable platen 120 and the ejector unit 200. The worker visually observes a drop state of the molding product group M and adjusts the increase/decrease of the synchronization ratio $\sigma$ between the movable platen 120 and the ejector unit 200 in order to set the drop position of the molding product group M to a desired position using the operation input unit 901. The operation input unit 901 outputs the information of the operation input to the adjusting device 902.

For example, as shown in Fig. 9, as the operation input unit 901, a knob component can be applied, in which the synchronization ratio $\sigma$ increases when the knob component is turned in one direction and the synchronization ratio $\sigma$ decreases when the knob component turned in the reverse direction. Alternatively, as the operation input unit 901, a pair of button devices for increasing $\sigma$ and decreasing $\sigma$ may be applied, or a configuration for performing displaying on a touch panel or the like may be applied. In the operation input unit 901, it is not necessary for the worker to input a specific setting value, and it is preferable that the synchronization ratio $\sigma$ can be relatively increased or decreased relative to the current value by an intuitive operation such as a knob rotation operation or a button press operation.

The adjusting device 902 adjusts the drop position of the molding product group M with respect to the stationary mold 11 according to the operation input from the worker by the operation input unit 901. The adjusting device 902 includes an input detection unit 903 and an adjusting unit 904 regarding this function.

The input detection unit 903 detects the operation input via the operation input unit 901 of the worker of the injection molding machine 1. If the input detection unit 903 detects that the information of the synchronization ratio $\sigma$ is input as the operation input from the operation input unit 901, the input detection unit 903 outputs the information of the synchronization ratio $\sigma$ based on the operation input to the adjusting unit 904.

The adjusting unit 904 adjusts the drop position of the molding product group M with respect to the stationary mold 11 by changing the synchronization ratio $\sigma$ between the movable platen 120 and the ejector unit 200 according to the operation input detected by the input detection unit 903.

In the second embodiment, since the synchronization ratio $\sigma$ between the movable platen 120 and the ejector unit 200, which strongly relates to the drop behavior of the molding product group M which is an object to be controlled, is used as the control amount, the worker can intuitively performs the adjustment of drop position of molding product group M via the operation input unit 901 and can easily perform setting for dropping the molding product at a desired position. In addition, the distance between the drop position of the molding product and the stationary mold 11 can be appropriately set and corrected, and thus, for example, according to the operation input, it is possible to suppress the variations of the drop time of the molding product or a cycle-down caused by the molding product abutting the stationary mold 11 and being dropped.

Hereinbefore, the embodiments are described with reference to specific examples. However, the present disclosure is not limited to these specific examples. Those obtained by applying appropriately design modifications to these specific examples by a person skilled in the art are also included within the scope of the present disclosure as long as they have the features of the present disclosure. The elements, the dispositions thereof, the conditions, the shapes, and the like of each specific example described above are not limited to those exemplified and can be appropriately modified. Each element included in each of the above-described specific examples can be appropriately changed in combination as long as no technical inconsistency occurs.

In the above-described embodiments, the configuration is exemplified in which the synchronization ratio $\sigma$

between the movable platen 120 and the ejector unit 200 is adjusted in order to adjust the drop position of the molding product group M and the mold opening speed $v_M$ is changed. However, parameters other than the synchronization ratio $\sigma$ may be adjusted as long as the mold opening speed $v_M$ is changed. In addition, a configuration may adopted in which a control amount other than the mold opening speed vM is controlled as long as the drop position of the molding product group M can be adjusted.

In the above-described embodiments, as the method of adjusting the drop position of the molding product group M with respect to the stationary mold 11, the changing (changing of $\sigma$) of the mold opening speed $v_M$ and the changing (the changing of the time t1 in Fig. 6) of the ejecting start timing of the ejector unit 200 are used in combination. However, the present invention is not limited to this. For example, only the mold opening speed $v_M$ is changed, and the ejecting start timing may be the same. In this case, the mold opening limit is changed depending on the synchronization ratio $\sigma$ between the movable platen 120 and the ejector unit 200. Alternatively, the mold opening speed $v_M$ is not changed, and only the ejecting start timing may be changed.

In the above-described embodiments, as the drop information relating to the distance between the stationary mold 11 of the mold clamping unit 100 and the molding product group M, the horizontal speed $v_X$ is exemplified. However, other information may be adopted as long it reflects the change of the distance between the stationary mold 11 and the molding product group M.

Brief Description of the Reference Symbols

1: injection molding machine
11: stationary mold
100: mold clamping unit
200: ejector unit
801: camera (molding product group information acquisition unit)
804: drop information calculation unit
805, 904: adjusting unit
901: operation input unit
M: molding product group
$v_M$: mold opening speed
$v_E$: ejection speed
$v_X$: horizontal speed (speed in mold opening/closing direction)
W: drop position width
$\sigma$: synchronization ratio between mold clamping unit and ejector unit

**Claims**

1.    An injection molding machine (1), comprising:

a mold clamping unit (100) which includes a movable platen (120) and a stationary platen (110);
a molding product group information acquisition unit configured to acquire information relating to a molding product group dropping from a movable mold (12) attached to the movable platen (120);
a drop information calculation unit (804) configured to calculate drop information relating to a distance between a stationary mold (11) attached to the stationary platen (110) and the molding product group, based on the information acquired by the molding product group information acquisition unit; and
an adjusting unit (805) configured to adjust a drop position of the molding product group with respect to the stationary mold (11) according to the drop information calculated by the drop information calculation unit,
wherein the adjusting unit (805) is configured to change a synchronization ratio, which is a ratio between a mold opening speed of the movable platen (120) and an ejection speed of the ejector unit which ejects the molding product group from the movable mold (12), to adjust the drop position of the molding product group with respect to the stationary mold (11).

2.    The injection molding machine according to claim 1,
wherein the molding product group information acquisition unit is a camera (801) which photographs the molding product group dropping from the movable mold.

3. The injection molding machine (1) according to claim 1 or 2,
wherein the adjusting unit (805) is configured to change a mold opening speed of the movable platen (120) to adjust the drop position of the molding product group with respect to the stationary mold (11).

4. The injection molding machine (1) according to any one of claims 1 to 3,
wherein the adjusting unit (805) is configured to change an ejection start timing of an ejector unit which ejects the molding product group from the movable mold to adjust the drop position of the molding product group with respect to the stationary mold (11).

5. The injection molding machine (1) according to any one of claims 1 to 4,
wherein the drop information calculation unit (804) is configured to calculate a speed in a mold opening/closing direction of the molding product group dropping from the movable mold (12), as the drop information, and
wherein the adjusting unit (805) is configured to change the synchronization ratio such that the speed in the mold opening/closing direction is 0 to adjust the drop position of the molding product group with respect to the stationary mold (11) .

6. The injection molding machine (1) according to any one of claims 1 to 5,
wherein the drop information calculation unit (804) is configured to calculate a drop position width along the mold opening/closing direction of the molding product group dropping from the movable mold (12), and
wherein after the adjusting unit (805) adjusts the drop position using the synchronization ratio, the adjusting unit adjusts a mold opening limit of the movable platen (120) according to a relationship between the drop position width calculated by the drop information calculation unit and a mold opening amount of the movable platen (120).

7. An injection molding machine (1), comprising:

a mold clamping unit (100) which includes a movable platen (120) and a stationary platen (110);
an operation input unit which receives an operation input from a worker of the injection molding machine (1); and
an adjusting unit (805) which is configured to adjust a drop position of a molding product group dropping from a movable mold (12) attached to the movable platen (120) with respect to a stationary mold (11) attached to the stationary platen (110), according to the operation input via the operation input unit,
wherein the operation input by the operation input unit is information relating to an increase or a decrease of a synchronization ratio which is a ratio between a mold opening speed of the movable platen (120) and an ejection speed of an ejector unit which ejects the molding product group from the movable mold (12), and
wherein the adjusting unit (805) is configured to change the synchronization ratio according to the operation input to adjust the drop position of the molding product group with respect to the stationary mold (11).

**Patentansprüche**

1. Spritzgießmaschine (1), umfassend:

eine Formschließeinheit (100), die eine bewegliche Platte (120) und eine stationäre Platte (110) aufweist;
eine Formproduktgruppen-Informationserfassungseinheit, die konfiguriert ist, um Information bezüglich einer aus einer beweglichen Form (12), die an der beweglichen Platte (120) angebracht ist, fallenden Formproduktgruppe zu erfassen;
eine Fallinformationsberechnungseinheit (804), die konfiguriert ist, um Fallinformation bezüglich eines Abstands zwischen einer stationären Form (11), die an der stationären Platte (110) angebracht ist, und der Formproduktgruppe zu berechnen, basierend auf der Information, die durch die Formproduktgruppen-Informationserfassungseinheit erfasst wurde; und
eine Einstelleinheit (805), die konfiguriert ist, um eine Fallposition der Formproduktgruppe in Bezug auf die stationäre Form (11) gemäß der durch die Fallinformationsberechnungseinheit berechneten Fallinformation einzustellen,
wobei die Einstelleinheit (805) konfiguriert ist, ein Synchronisationsverhältnis zu ändern, das ein Verhältnis zwischen einer Formöffnungsgeschwindigkeit der beweglichen Platte (120) und einer Auswurfgeschwindigkeit der Auswurfeinheit, die die Formproduktgruppe aus der beweglichen Form (12) auswirft, ist, um die Fallposition der Formproduktgruppe in Bezug auf die stationäre Form (11) einzustellen.

2. Spritzgießmaschine nach Anspruch 1,

wobei die Formproduktgruppen-Informationserfassungseinheit eine Kamera (801) ist, die die aus der beweglichen Form fallende Formproduktgruppe fotografiert.

3. Spritzgießmaschine (1) nach Anspruch 1 oder 2,
wobei die Einstelleinheit (805) konfiguriert ist, um eine Formöffnungsgeschwindigkeit der beweglichen Platte (120) zu ändern, um die Fallposition der Formproduktgruppe in Bezug auf die stationäre Form (11) einzustellen.

4. Spritzgießmaschine (1) nach einem der Ansprüche 1 bis 3,
wobei die Einstelleinheit (805) konfiguriert ist, um einen Auswurfstartzeitpunkt einer Auswurfeinheit zu ändern, die die Formproduktgruppe aus der beweglichen Form auswirft, um die Fallposition der Formproduktgruppe in Bezug auf die stationäre Form (11) einzustellen.

5. Spritzgießmaschine (1) nach einem der Ansprüche 1 bis 4,
wobei die Fallinformationsberechnungseinheit (804) konfiguriert ist, um eine Geschwindigkeit in einer Form-Öffnungs-/Schließrichtung der aus der beweglichen Form (12) fallenden Formproduktgruppe als Fallinformation zu berechnen, und
wobei die Einstelleinheit (805) konfiguriert ist, um das Synchronisationsverhältnis derart zu ändern, dass die Geschwindigkeit in der Form-Öffnungs-/Schließrichtung 0 ist, um die Fallposition der Formproduktgruppe in Bezug auf die stationäre Form (11) einzustellen.

6. Spritzgießmaschine (1) nach einem der Ansprüche 1 bis 5,
wobei die Fallinformationsberechnungseinheit (804) konfiguriert ist, um eine Fallpositionsweite entlang der Form-Öffnungs-/Schließrichtung der aus der beweglichen Form (12) fallenden Produktgruppe zu berechnen, und
wobei, nachdem die Einstelleinheit (805) die Fallposition unter Verwendung des Synchronisationsverhältnisses eingestellt hat, die Einstelleinheit eine Formöffnungsgrenze der beweglichen Platte (120) gemäß einer Beziehung zwischen der durch die Fallinformationsberechnungseinheit berechneten Fallpositionsweite und einen Formöffnungsbetrag der beweglichen Platte (120) einstellt.

7. Spritzgießmaschine (1), umfassend:

eine Formschließeinheit (100), die eine bewegliche Platte (120) und eine stationäre Platte (110) aufweist;
eine Betriebseingabeeinheit, die eine Betriebseingabe von einem Arbeiter der Spritzgießmaschine (1) empfängt; und
eine Einstelleinheit (805), die konfiguriert ist, um eine Fallposition einer aus einer beweglichen Form (12), die an der beweglichen Platte (120) angebracht ist, fallenden Formproduktgruppe in Bezug auf eine stationäre Form (11), die an der stationären Platte angebracht ist (110), einzustellen gemäß der Betriebseingabe über die Betriebseingabeeinheit, wobei die durch die Betriebseingabeeinheit eingegebene Betriebseingabe Information bezüglich einer Erhöhung oder einer Verringerung eines Synchronisationsverhältnisses ist, das ein Verhältnis zwischen einer Formöffnungsgeschwindigkeit der beweglichen Platte (120) und einer Auswurfgeschwindigkeit einer Auswurfeinheit, die die Formproduktgruppe aus der beweglichen Form (12) auswirft, ist, und
wobei die Einstelleinheit (805) konfiguriert ist, um das Synchronisationsverhältnis gemäß der Betriebseingabe zu ändern, um die Fallposition der Formproduktgruppe in Bezug auf die stationäre Form (11) einzustellen.

**Revendications**

1. Une machine de moulage par injection (1), comprenant :

une unité de fixation de moule (100) qui comprend une platine mobile (120) et une platine stationnaire (110) ;
une unité d'acquisition d'informations de groupe de produits de moulage configurée pour acquérir des informations relatives à un groupe de produits de moulage qui tombe d'un moule mobile (12) fixé sur la platine mobile (120) ;
une unité de calcul d'informations de chute (804) configurée pour calculer des informations de chute relatives à une distance entre un moule stationnaire (11) fixé sur la platine stationnaire (110) et le groupe de produits de moulage, sur la base des informations acquises par l'unité d'acquisition d'informations de groupe de produits de moulage ; et
une unité d'ajustement (805) configurée pour ajuster une position de chute du groupe de produits de moulage par rapport au moule stationnaire (11) selon les informations de chute calculées par l'unité de calcul d'informations de chute,

dans laquelle l'unité d'ajustement (805) est configurée pour modifier un rapport de synchronisation, qui est un rapport entre une vitesse d'ouverture de moule de la platine mobile (120) et une vitesse d'éjection de l'unité d'éjecteur qui éjecte le groupe de produits de moulage du moule mobile (12), afin d'ajuster la position de chute du groupe de produits de moulage par rapport au moule stationnaire (11).

2. La machine de moulage par injection selon la revendication 1,

dans laquelle l'unité d'acquisition d'informations de groupe de produits de moulage est un appareil photo (801) qui photographie le groupe de produits de moulage qui tombe du moule mobile.

3. La machine de moulage par injection (1) selon la revendication 1 ou 2,

dans laquelle l'unité d'ajustement (805) est configurée pour modifier une vitesse d'ouverture de moule de la platine mobile (120) afin d'ajuster la position de chute du groupe de produits de moulage par rapport au moule stationnaire (11).

4. La machine de moulage par injection (1) selon l'une quelconque des revendications 1 à 3,

dans laquelle l'unité d'ajustement (805) est configurée pour modifier un moment de début d'éjection d'une unité d'éjecteur qui éjecte le groupe de produits de moulage du moule mobile afin d'ajuster la position de chute du groupe de produits de moulage par rapport au moule stationnaire (11).

5. La machine de moulage par injection (1) selon l'une quelconque des revendications 1 à 4,

dans laquelle l'unité de calcul d'informations de chute (804) est configurée pour calculer une vitesse dans une direction d'ouverture/de fermeture de moule du groupe de produits de moulage qui tombe du moule mobile (12), en guise d'informations de chute, et

dans laquelle l'unité d'ajustement (805) est configurée pour modifier le rapport de synchronisation de sorte que la vitesse dans la direction d'ouverture/de fermeture du moule soit de 0 afin d'ajuster la position de chute du groupe de produits de moulage par rapport au moule stationnaire (11).

6. La machine de moulage par injection (1) selon l'une quelconque des revendications 1 à 5,

dans laquelle l'unité de calcul d'informations de chute (804) est configurée pour calculer une largeur de position de chute le long de la direction d'ouverture/de fermeture de moule du groupe de produits de moulage qui tombe du moule mobile (12), et

dans laquelle, après que l'unité d'ajustement (805) a ajusté la position de chute à l'aide du rapport de synchronisation, l'unité d'ajustement ajuste une limite d'ouverture de moule de la platine mobile (120) selon une relation entre la largeur de position de chute calculée par l'unité de calcul d'informations de chute et une quantité d'ouverture de moule de la platine mobile (120).

7. La machine de moulage par injection (1), comprenant :

une unité de fixation de moule (100) qui comprend une platine mobile (120) et une platine stationnaire (110) ;
une unité d'entrée de fonctionnement qui reçoit une entrée de fonctionnement de la part d'un opérateur de la machine de moulage par injection (1) ; et
une unité d'ajustement (805) qui est configurée pour ajuster une position de chute d'un groupe de produits de moulage qui tombe d'un moule mobile (12) fixé sur la platine mobile (120) par rapport à un moule stationnaire (11) fixé sur la platine stationnaire (110), selon l'entrée de fonctionnement via l'unité d'entrée de fonctionnement, dans laquelle l'entrée de fonctionnement par l'unité d'entrée de fonctionnement est une information relative à une augmentation ou une diminution d'un rapport de synchronisation qui est un rapport entre une vitesse d'ouverture de moule de la platine mobile (120) et une vitesse d'éjection d'une unité d'éjecteur qui éjecte le groupe de produits de moulage du moule mobile (12), et

dans laquelle l'unité d'ajustement (805) est configurée pour modifier le rapport de synchronisation selon l'entrée de fonctionnement afin d'ajuster la position de chute du groupe de produits de moulage par rapport au moule stationnaire (11).

**FIG. 1**

FIG. 2

# FIG. 3

## FIG. 4

## FIG. 5

# FIG. 6

# FIG. 7

START

S101
PHOTOGRAPH MOLDING PRODUCT GROUP M DROPPING FROM MOLD

S102
CALCULATE HORIZONTAL SPEED $\nu_x$ OF MOLDING PRODUCT GROUP M

S103
$\nu_x > 0?$ — Yes → S104 INCREASE $\sigma$

No

S105
$\nu_x < 0?$ — Yes → S106 DECREASE $\sigma$

No

END

# FIG. 8

START

S201
PHOTOGRAPH MOLDING PRODUCT
GROUP M DROPPING FROM MOLD

S202
CALCULATE DROP POSITION WIDTH
W OF MOLDING PRODUCT GROUP M

S203
IS W TOO LARGE WITH RESPECT TO MOLD OPENING LIMIT?

Yes → S204 INCREASE MOLD OPENING LIMIT

No

S205
IS W TOO SMALL WITH RESPECT TO MOLD OPENING LIMIT?

Yes → S206 DECREASE MOLD OPENING LIMIT

No

END

# FIG. 9

**EP 3 381 642 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001150496 A
- WO 2014082168 A1
- EP 2749342 A1